# EUROPEAN PATENT SPECIFICATION

(11) **EP 0 746 517 B1**
(45) Date of publication and mention of the grant of the patent: **06.05.1998**
(21) Application number: 95907815.5
(22) Date of filing: 31.01.1995
(51) Int. Cl.: B65G 33/02, B65G 33/34, B65G 47/51, B65G 47/61, B65G 47/88, B65G 1/137

(54) **CONTINUOUS HELICAL GEAR PLANT FOR CONVEYING AND STORING SUSPENDED ITEMS AND RELATIVE SUPPORTS**
ENDLOSE FÖRDER-UND LAGERSCHNECKEN-ANORDNUNG FÜR HÄNGENDE GEGENSTÄNDE UND SEINE UNTERSTÜTZUNGSSTRUKTUR
INSTALLATION A VIS HELICOIDALES CONTINUES DESTINEE AU TRANSPORT ET AU STOCKAGE D'ARTICLES SUSPENDUS ET DE LEURS SUPPORTS

(30) Priority: 02.02.1994 IT MO940010
(43) Date of publication of application: 11.12.1996
(73) Proprietor: ISTRIA S.R.L., I-41012 Carpi (MO) (IT); Cini, Claudio, I-41012 Carpi (MO) (IT); Silipo, Margherita, I-41012 Carpi (MO) (IT)
(72) Inventor: CINI, Claudio, I-41012 Carpi (IT); SILIPO, Margherita, I-41012 Carpi (IT)
(74) Representative: Gislon, Gabriele
(86) International application number: IT9500013
(87) International publication number: WO9521116

(56) References cited:
- EP-A- 0 005 539
- EP-A- 0 302 961
- EP-A- 0 336 714
- EP-A- 0 516 970
- DE-A- 4 205 456

## Description

The invention concerns a continuous helical gear plant for conveying and storing suspended item and relative supports, that is, a plant which, by means of a helical gear extending most of the path taken by the suspended items, enables them to be conveyed and parked in portions of the said plant, in effect at the same time operating the warehouse, including loading and unloading, without requiring the intervention of personnel; furthermore, the invention concerns the most advantageous embodiments of the relative supports.

The prior art includes warehouse devices for suspended objects consisting mainly of rails on which run trolleys or chains to convey the said objects; there are also helical gear devices for conveying suspended items with lengths that are limited to short stretches. Also, European patent application EP-A-0647577 describes a helical gear device that enables suspended objects to run indefinite distances, also along curved trajectories; moreover, it proposes sliding supports that have been found not to be very reliable, dissipating a considerable amount energy.

From European patent application No.0302961 A1 is known a live storage carousel for garment hangers comprises two scroll conveyors arranged in spaced, vertical and parallel planes; said scroll conveyors are oppositely and equally angled and gravity guides connect adijacent upper and lower ends to form an endless path; one of the guides can be broken at will to divert hangers onto an output conveyor. However the hangers do not go straight through the switch or in/out from the carousel but they go out only, thus no automated sequence of in/out or straight passage of the switch may be made.

Such prior art may be subject to considerable improvements with a view to achieving, using some of the supports of the said patent application, complex plants which are automatically operated, with set-up of storage conveyors with switches that are able to made automatic working, as well as improving the supports as described to achieve reliable operation.

From the foregoing emerges the need to solve the technical problem of finding the most suitable conformation of the lines of the conveying and storing plant, devices for detecting and controlling the movements of the items and devices for switching the suspended items from one line to another; such a new ideal conformation, moreover, including a new type of support that makes operation more economical and reliable.

The invention solves the said technical problem by adopting: a continuous helical gear plant for conveying and storing suspended items including stretches of coaxial and synchronously rotating helical gears constituting conveyor lines and parking and storing rings connected to them by means of slip points and joints, comprising at least one scanner upstream of each slip point controlling the same characterised in that each parking and storing ring is connected, by means of one descending spiral node to two conveyor lines at least, of which one at the top of the other, for loading and unloading the ring; the descending spiral node includes a first descending tube, reaching from the upper conveyor line to the parking ring, and a second descending tube reaching from the parking ring to the lower conveyor line; said slip points switching the hangers from the upper conveyor line to the first descending tube and from the parking ring to the second descending tube; said joints switching the hangers from the first descending tube to the parking ring and from the second descending tube to the lower conveyor line.

Also adopting: more than one conveyor lines following in rise having loading-unloading function, each of they connected with a parking and storing ring at least; the said loading and unloading lines being combined with back conveyor lines at different levels.

Also adopting, in combination with or as an alternative to the succession of loading-unloading lines mentioned previously: stretches of helical gear conveyor ascending from the entry line to the loading line higher up; the succession of loading-unloading lines descending to lower levels: the said lines being connected by means of spiral nodes with the parking and storing rings.

Also adopting: the junction between one said spiral node and the storing ring positioned at a lower level than that of the ring and between the starting and ending levels of the node itself; the spiral node consisting of stretches of smooth tube descending from the upper loading line, or even the unloading line of higher level rings, to the junction and from the junction to the lower unloading line, or even the loading line of lower level rings; a stretch of smooth tubing descending from the level of the storing ring to the level of the junction and a stretch of rotating helical gear ascending to the level of the said junction of the said ring; descent control devices on the descending tubes for the hangers with the suspended items of clothing; detector of presence of the hangers both before and after the slip points, at the junctions, in the vicinity of the descent control devices and also at the beginning of the stretch of descending tube of the ring.

Also adopting: scanners consisting of bar code readers connected with a processor that controls the slip points so as to manage the stock and to deliver the items to their designated boxes; the bar code, applied to each hanger, with horizontal lines and the scanner reading the code vertically so as to identify the item in question; a bar code reader positioned at each slip point for the systematic monitoring of the passing items and controlling the switching.

Adopting also: in combination with a descent control device a scanner detector of presence for a stretch of helical gear preceding the joint between the descending tube and the said helical gear; a series spiral rings connecting loading-unloading lines at different levels, for the rapid exit of the hangers without interfering with the parking and storing rings.

Adopting, in the interests of more economical and safe operation, in conjunction with one or more of the characteristics mentioned previously: rolling friction supports, motorised or not, in which the end of the helical gear, rigid or flexible, is splined to a rotating pin equipped with a driving element coupled to the race of a rolling bearing; the opposite race being coupled rigidly to the structure by means of a support having a thickness not greater than the base of the thread of the helical gear.

Also adopting: the end of the helical gear keyed to the internal race of the said rolling bearing, advantageously a needle bearing, by means of the said rotating pin; the external ring being rigidly fixed to the support structure by means of a U bolt.

Also adopting: the said spline between the pin and the end of the helical gear consisting of a radial tooth joint made oscillating due to the curvature of at least one of the sets of teeth.

Also adopting: a motorised support equipped with a stretch of continuous helical gear with teeth set into the thread, coupled to a support cylinder at whose ends there are two rotating pins to drive the ends of the helical gears coupled to it; the stretch of helical gear being driven by a toothed cylinder placed underneath it in a sub-vertical position, supported on bearings at the sides of the said motorised supports.

Also adopting: a seal placed in its relative seat at the ends of the helical gear or the stretch of toothed helical gear; a chamfer on the internal teeth of the said splined joint, to facilitate the dismantling and assembly of the support, be it motorised or not.

Also adopting: in the support, motorised or not, at the joint between the rigid helical gear, or the stretch of toothed helical gear, and the flexible helical gear there being a rotating pin elongated on the side of the flexible helical gear with a groove into which is snap-inserted an elastic element held in the end of the tubular core of the said flexible helical gear.

Also adopting: a pin fixed to the support structure to hold the end of the helical gear in the vicinity of a stretch of descending tube which supports a wheel made of low friction material, or a rolling bearing, inside the end of the said helical gear.

Also adopting, in combination with at least one or more of the characteristics of the conveying and storing plant: a support for the flexible helical gear consisting of a cradle with rollers in its bottom portion.

The advantages offered by the present invention are: complete freedom in the logistic disposition of the conveying and the storing areas of the items, complete utilisation of the available storing space without structural limits of the building; flexibility, both when using a plant operated in a causal manner, with preferential destinations in function of the category of the goods and the typology of the products, and when using a plant operated with a random disposition of the items in stock, thereby achieving maximum flexibility of allocation of the items; furthermore, loading can occur as preferred, both from the top of the warehouse, with descending loading-unloading lines, or from the bottom with ascending loading-unloading lines; the acceptance of the items from the production line is entirely independent of the running of the warehouse; high unloading speed of the items from the warehouse and rapidity in directing them to the boxes for delivery: the arrangement in successive vertical spiral of the nodes and the positioning of the nodes side-by-side so as to create a number of exit lines makes for extremely rapid unloading; operation is continuous and without the manual intervention of personnel: the system is controlled by a processor, thereby enabling operation at night.

The new conformation of the supports of the rigid and flexible helical gear, equipped with rolling bearings or rollers, due to the considerable reduction in friction enables a considerable reduction in the power rating of the motors driving the helical gear; operational reliability is thereby made very good, enabling the plant to operate even without direct surveillance; finally, adopting rolling supports with the ends of the rigid or flexible helical gears all the same enables the parts of the storing plant to be made modular.

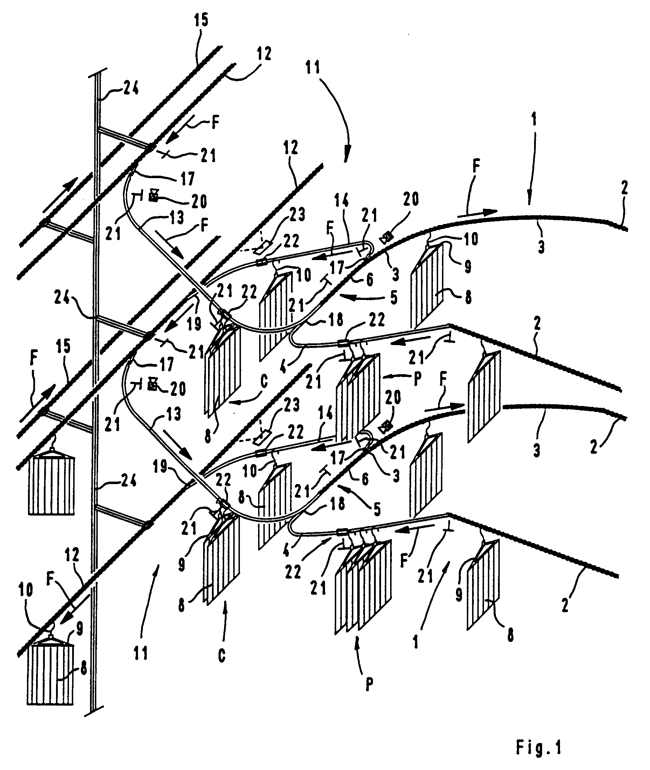

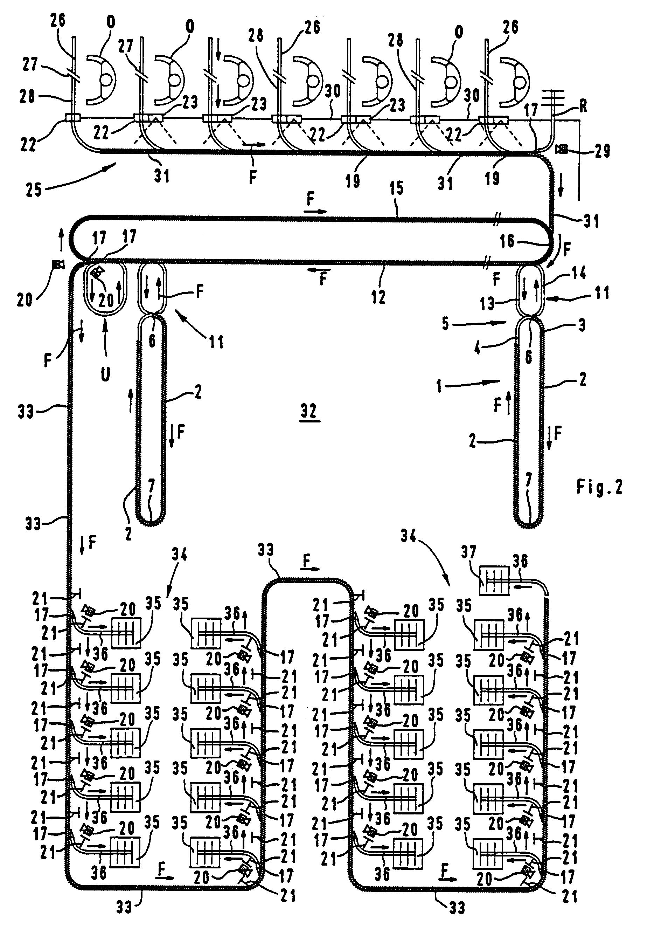

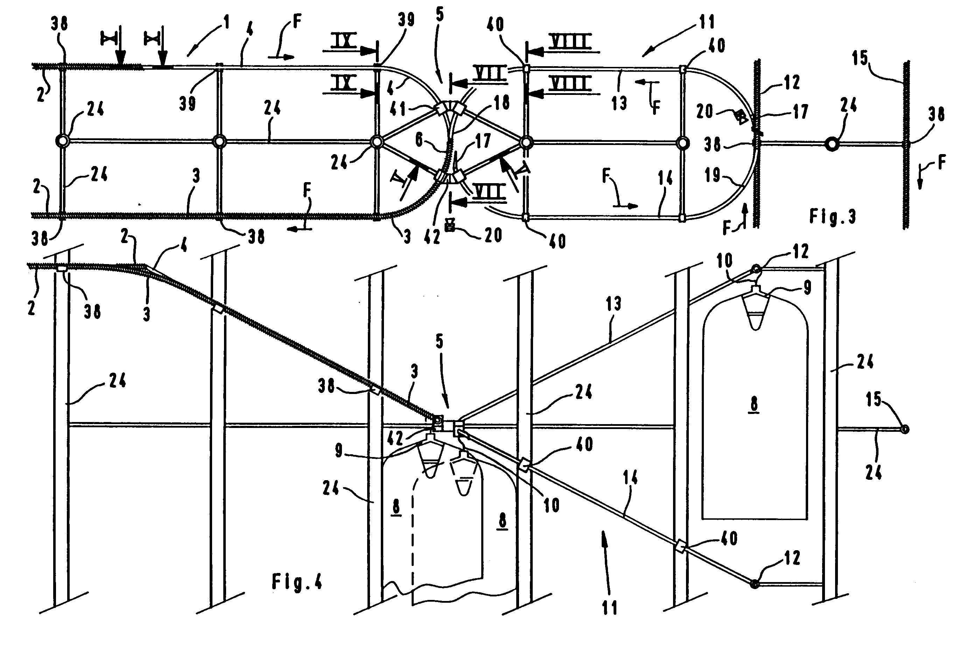

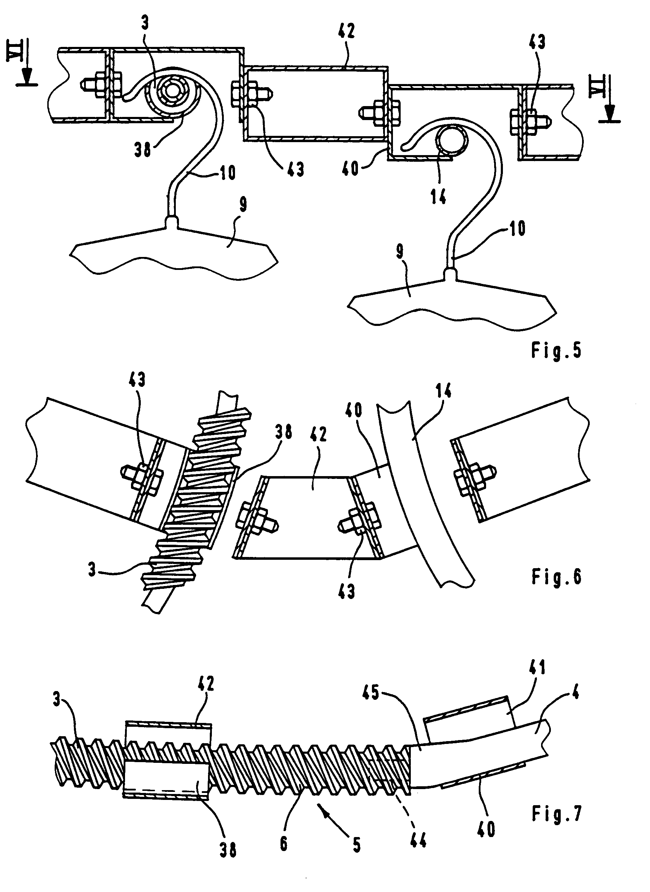

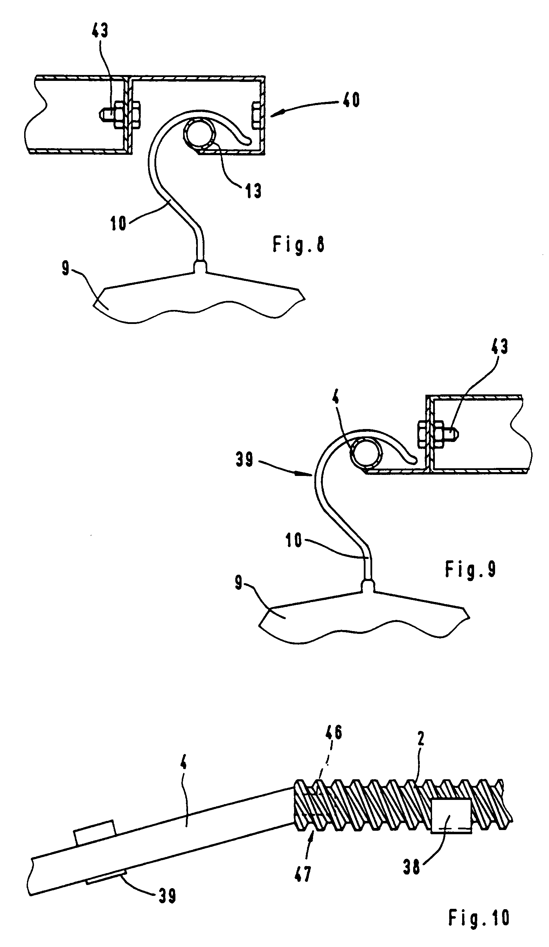

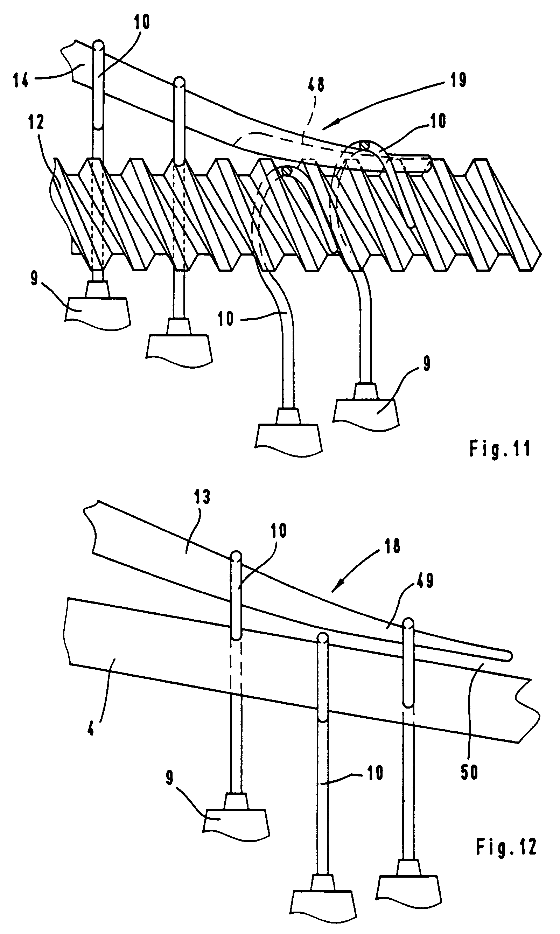

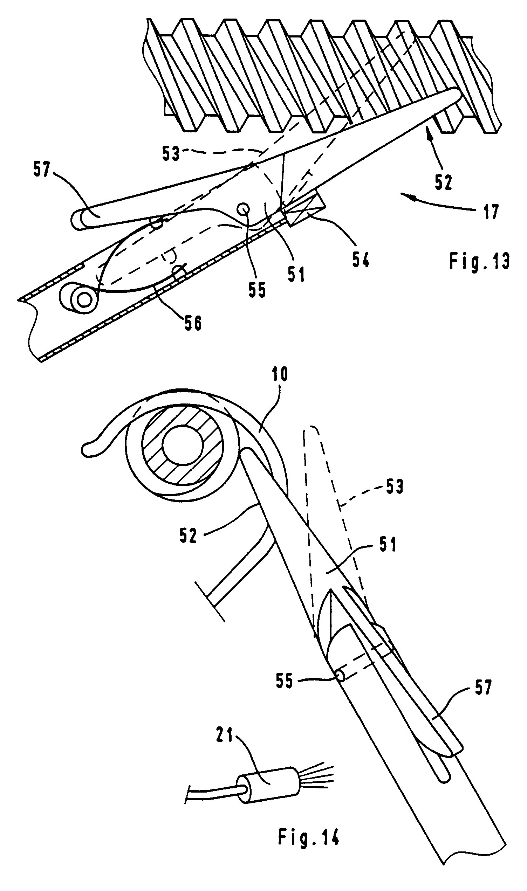

Some embodiments of the invention are illustrated, purely by way of example, in the fourteen tables of drawings attached, in which Figure 1 is the perspective view of the lines with two superimposed nodes between the loading-unloading lines and the storage lines; Figure 2 is the plan view of the entire plant highlighting the control-loading area and the destination area: the storage area is shown proportionally smaller and in less detail, in that it is shown more clearly in the following Figures; Figure 3 is the plan view of a node in Figure 1; Figure 4 is the side view of the node of Figure 3; Figure 5 is a partial section V-V of the support for two lines in the vicinity of the node in Figure 3; Figure 6 is section VI-VI of Figure 5; Figure 7 is longitudinal section VII-VII of Figure 3 at the junction; Figure 8 is section VIII-VIII of Figure 3 at the support of the spiral node connecting the said lines; Figure 9 is section IX-IX of Figure 3 at the support of the descending connecting ramp; Figure 10 is side view X-X of Figure 3.

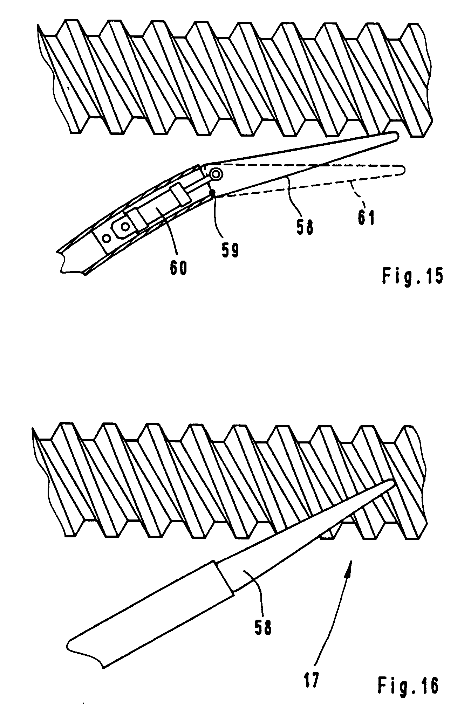

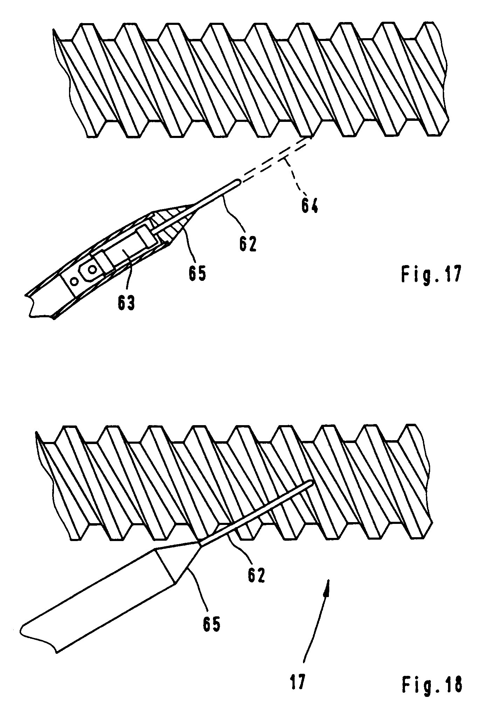

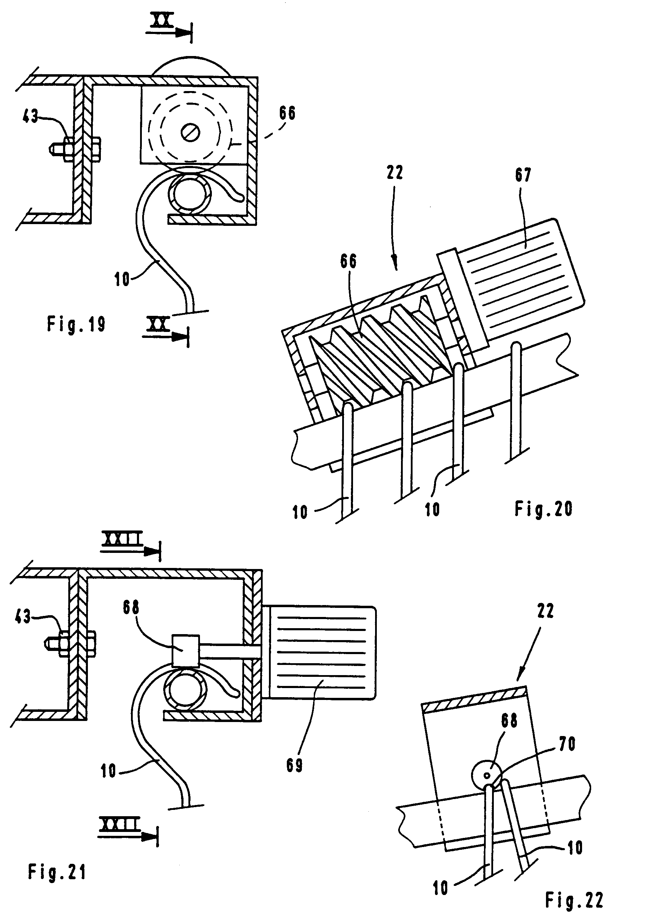

Moreover: Figure 11 is the side view of a joint between a sliding line and the continuous helical gear; Figure 12 is the side view of a joint between two sliding lines; Figure 13 is the partially sectioned side view of the rocker arm switching element; Figure 14 is the view, axial to the helical gear, of the same switching element of Figure 13; Figure 15 is the partially sectioned plan view of the finger switching element; Figure 16 is the side view of the switching element of the previous figure; Figure 17 is the partially sectioned plan view of the needle switching element; Figure 18 is the side view of the switching element of the previous figure; Figure 19 is the section prependicular to the sliding direction of the helical gear descent control device; Figure 20 is section XX-XX of Figure 19; Figure 21 is the section prependicular to the sliding direction of the cam descent control device; Figure 22 is section XXII-XXII of Figure 21.

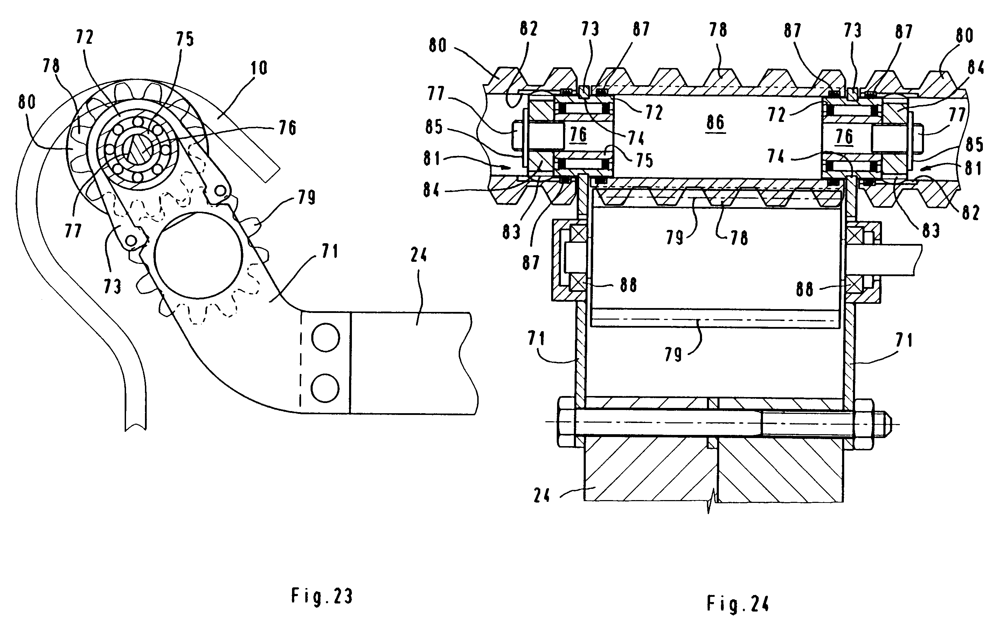

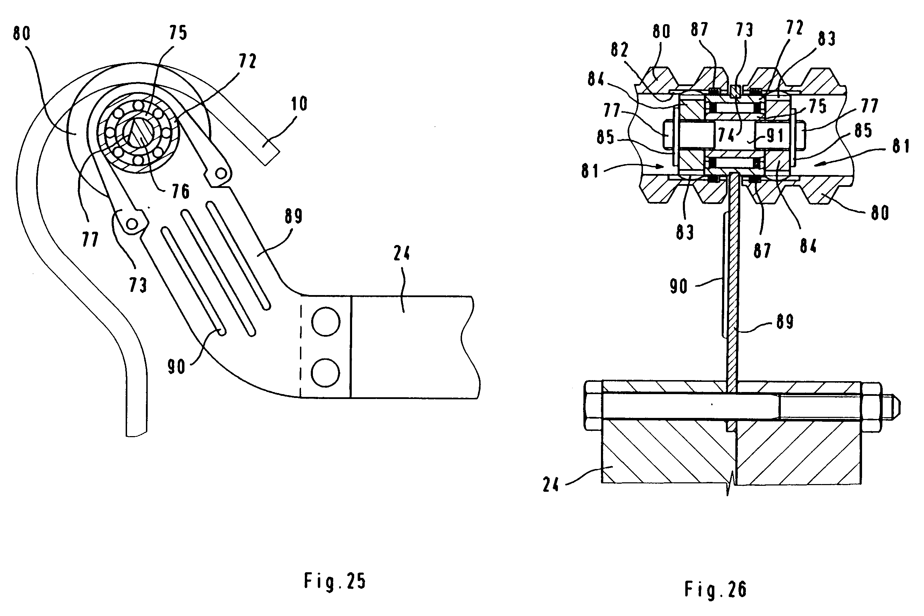

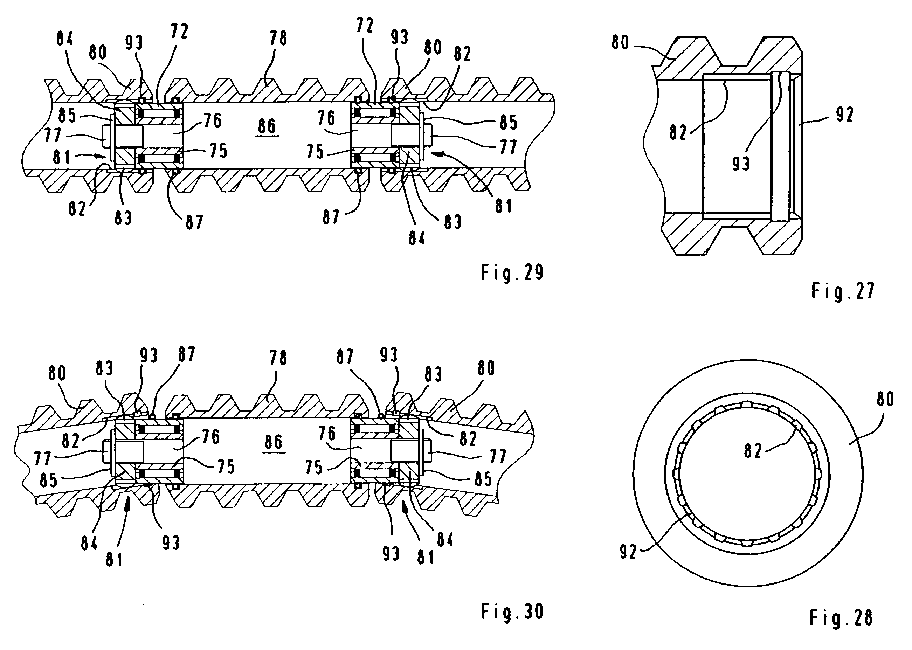

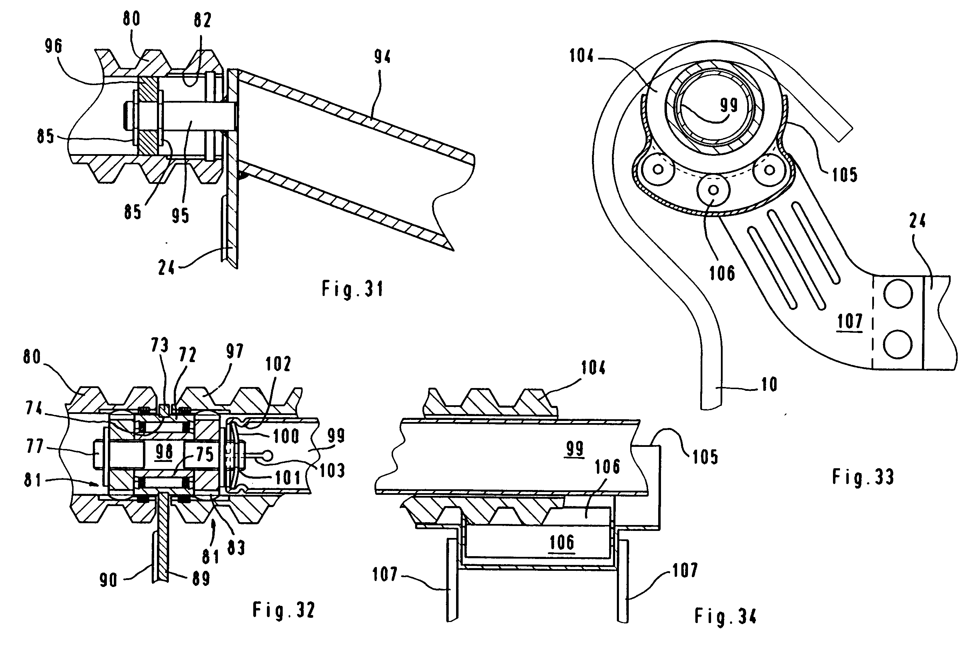

Finally: Figure 23 is the transverse section of a motorised support according to the present invention; Figure 24 is the longitudinal section of the motorised support; Figure 25 is the transverse section of a support which is not motorised; Figure 26 is the longitudinal section of the support which is not motorised; Figure 27 is the longitudinal section of the end of the rigid or flexible helical gear; Figure 28 is the transverse section of the said end; Figure 29 and Figure 30 show how the motorised or non-motorised support is dismantled; Figure 31 is the longitudinal section of a support for a stretch of descending tube coupled to the rigid helical gear; Figure 32 is the section of an end support at the joint between the rigid and the flexible helical gear; Figure 33 is the transverse section of a support with rollers for the flexible helical gear; Figure 34 is the longitudinal section of the support in Figure 33.

The figures show: 1, Figure 1, the storing ring, as described, consisting of horizontal stretches 2 with rigid conveying and storing helical gear, an ascending stretch 3 with flexible conveying helical gear and a descending stretch 4 with rigid tube ending at the junction 5, aligned with the first horizontal stretch 6 of the said stretch of ascending helical gear 3: the ring is closed between the two horizontal stretches by an 180° curve 7 with flexible helical gear, visible only in Figure 2; 8, Figure 1, the item of clothing suspended on the hanger 9 which has hook 10 that hooks round the helical gear or the tube always on the side of the route indicated by the directional arrows F; P, the temporary holding bay for the items exiting from the ring 1; 11, the spiral node that constitutes the transfer control unit for the hangers 9 from and to the storing ring 1 from the loading-unloading lines 12 with rigid conveying helical gear, by means of a first stretch of descending tube 13, as far as the said junction 5, and a second stretch of descending tube 14 from the junction to the underlying loading-unloading line 12: the said lines 12 are horizontal and are connected by lines 15 for returning to different level joined at the ends by a curve with ascending flexible helical gear 16, visible only in Figure 2; 17, Figure 1, the slip points for the hangers on the line with the conveying helical gear; 18, the joint between stretches of descending tube and 19, the joint between stretches of descending tube and the conveying helical gear; 20, the bar code reader, always positioned near a slip point; 21, detectors of presence positioned upstream and downstream of the slip points or at other positions along the lines to monitor progress; C, the waiting bay for crossing the next junction 5; 22, descent control devices for the hangers so as to avoid congestion; 23, a scanner detector of presence of a stretch of conveying helical gear; 24, the support structure, only part of which is shown in Figure 1 in the interests of clarity.

The Figures also show: 25, Figure 2, loading area where the operator O checks the items arriving from finishing and transfers them from a horizontal stand-by tube 26, beyond end stop 27, onto the descending tube 28: the descent control device 22, in co-operation with the scanner detector 23, releases the hanger if the following stretch of helical gear is free; 29 the bar code reader for introducing the item arriving in the store into the controlling information system: if the identification code is not verified, the item is diverted into the return branch R in the loading area 25; 30, a barrier to protect the operator O from the helical gear 31 directing the items to the storing area 32; U the connecting spirals between the superimposed lines 12 for rapid descent; 33, the exit line from the store, with conveying helical gear, towards the distribution area 34; 35, the box for packaging the items, positioned at the end of a stretch of descending tube 36 after the slip points of the exit line 33; 37, the last return box for items that have exited the store but have not been accepted by the various preceding boxes: their bar code tickets have to be re-checked manually, then they can be put back into the plant by the operator O.

The figures also show: 38, Figure 3, the support cradles of the conveying helical gear and 39, the internal supports for the descending tube 4; 40, the external supports of the descending tubes 13, 14; 41, the support structure for tubes 4 and 13 near the said junction 5; 42, the support structure for the ascending flexible helical gear 3 and for the stretch of descending tube 14; 43, Figure 5, the coupling bolts for the supports to the structure; 44, Figure 7, the end of tube 4 that couples to the core of the flexible helical gear 3; 45, the heel of the tube 4 that favours the entry of the hooks 10 onto the conveying helical gear; 46, Figure 10, the end of the descending tube 4 in the end 47 of the conveying helical gear 2; 48, Figure 11, the lower concavity of the tube at the joint with the conveying helical gear; 49, Figure 12, the convex end of the descending tube near the underlying tube: a clearance 50 is left between the two that enables hook 10 of the hanger descending on the underlying tube to pass.

The Figures also show: 51, Figure 13, the rocker of the slip point, rocking from a position 52 up against the helical gear and a position 53 adequately distanced from the said helical gear to allow the hook 10 to pass without being diverted; 54, the solenoid controlling the rocking on hinge 55 and against the action of spring 56; 57, the tail of the rocker which with the weight of the hanger facilitates the opening of the slip point; 58, Figure 15, the oscillating cone of the slip point on hinge 59 activated by a pneumatic actuator cylinder 60 for the open position 61; 62 the needle of the slip point, activated by a pneumatic actuator cylinder 63 to reach the diversion position 64: the hook of the hanger does not stop at the start of the descending tube because of the guiding tapered end 65; 66, Figure 19, a stretch of helical gear positioned against the top of the descending tube to stop and release the hangers on command: the helical gear is made to rotate by a stepper motor reducer 67; 68, Figure 21, a cam positioned against the top of the descending tube to stop and release the hangers on command; the cam is made to rotate by a stepper motor reducer 69: it has just a single cavity 70 for the passage of the hook 10, one for each complete revolution of the shaft.

The figures also show, as regards the new design of the helical gear and the rolling friction supports: 71, Figures 23 and 24, the side of the motorised support onto which the outer race 72 of a pin roller bearing is coupled by means of a U bolt 73, in a central groove 74; 75 the internal race of the bearing and 76 the rotating pin with driving key 77; 78, the teeth set into the thread of the stretch of continuous helical gear; 79, the toothed cylinder coupled to transmit the rotation to the helical gear; 80, the ends of the stretch of continuous helical gear, rigid or flexible, coupled to the said rotating pin 76 by means of a toothed joint 81, with an internal set of teeth 82 on the helical gear and external set convex 83 of the pinion 84, in turn coupled to the said pin 76 by means of key 77; 85 the axial stop ring for the pinion on the pin; 86, the support cylinder for the stretch of toothed continuous helical gear 78 and 87, a seal against dust and/or for the internal lubricant for the bearings; 88, the support bearings of the said toothed cylinder 79; 89, Figures 25 and 26, the thin intermediate non-motorised support, to which is coupled the external race 72 of the pin roller bearing by means of the said U bolt 73; 90, ribbing to stiffen the said thin support; 91; the short rotating pin of the non-motorised support: coupled to toothed joints 81 at the ends of the helical gear 80.

Finally, the figures also show: 92, Figures 27 and 28, the chamfer at the end of the internal teeth 82; 93, the seat of the seal; 94, Figure 31, a descending tube of the plant, held up by structure 24 and equipped with fixed pin 95, which, by means of two axial stop rings 85, supports the end of the continuous helical gear 80 with a wheel made of low friction material 96 in an internal position with respect to the teeth 82; 97, Figure 32, the end of the flexible helical gear, coupled on the intermediate Support with toothed joints 81, equipped with elongated rotating pin 98, so as to axially position the tubular core 99 inside the flexible helical gear; 100, the spring washer, snap inserted in a groove 101 on the said pin 98 and against internal ribs 102 at the end of the core 98, on which there is an axial slit 103 to enable the spring washer to be inserted; 104, Figures 33 and 34, the flexible helical gear on a cradle support 105, equipped with roller made of low friction material; 107, the sides of the cradle 105 fixed to the structure 24.

The operation of the plant is divided into three phases: loading, stock management and distribution of the items to the destination boxes.

During loading, the items of clothing 8 arriving from production are positioned on stretches of horizontal stand-by tube 26, the operator O checks the conformity with the specifications of the product, applies the bar code at the base of the hook 10 so that it can be easily seen and places the hanger with the checked item on descending tube 28 beyond the end stop 27; the next descent controller, in co-operation with the scanner detector 23, releases the hanger if the following stretch of conveying helical gear 31 is free: a series of hangers, therefore, are pushed along the helical gear 31 to the bar code reader 29 which then reads the bar code of the item entering, so that the processor is informed of all the items entering into the store; if the code is not recognised, because of a read error or the code does not exist in the processor, the item is diverted onto the return branch R to be rechecked in the loading area 25; the continuous helical gear 31, after the necessary corners, constituting the lowest loading-unloading line 12 of the storage area 32: at its end a slip point 17, controlled by a corresponding bar code reader 20, selects the items that have to be sent directly to the destination area 34, by activating the said slip points; otherwise the items continue along their path with the first ascending curve 16, rising to the various levels of the loading-unloading lines 12 as they continue along their path until they reach the last ring 1 of the store situated at the end of the highest line 12.

At each storing ring there is a bar code reader 20 that reads the data of the item as they pass, activating the relative slip points 17 if the item has to be loaded in the corresponding storing ring 1 or if the item has to exit the store.

The items in the store are controlled in the following manner: the items moving along the loading-unloading line 12 are checked at each slip point by the relative bar code reader; if the processor decides it has to be introduced into the storing ring 1 or sent to the exit, the slip point is activated and the item descends along the first stretch of tube 13 and is stopped by the descent control device 22, which releases it only if the following junction 5 is free of other items: another bar code reader reads the bar code of the item at the junction directing it to the entry of the storage ring 1 or towards the exit, that is descending on the second descending tube 14, where another descent controller in co-operation with a scanner detector 23, releases the item if the facing stretch of helical gear 12 is free of arriving hangers; in this way, if the item is to be made to exit rapidly, it can be made to follow the following stretches of tube 13 and 14 of the successive spiral nodes at the various levels of the store until it reaches the lowest loading-unloading line 12; alternatively, if the storage rings 1 are getting full, it can rapidly exit the store by means of the spirals U between the loading-unloading lines 12.

On the other hand, the path taken by the item in the storage ring 1 starts at junction 5 where the flexible helical ring of the ascending stretch 3 has its first horizontal stretch 6: the item is thereby pulled to the level of the storage ring, where it remains stored, but moving due to the continuous rotation of all the sections of helical gear, until it reaches the stretch of descending tube 4 returning it to junction 5; the descent is controlled by the relative controller 22, that withholds a gradually increasing number of items, constituting a storage bay P, as the loading process continues and the items previously loaded reach the said tube 4: a detector 21, positioned at the end of the horizontal stretch 2, counts the number of items that accumulate and, once the saturation level is reached in the bay P, the flow of items in stand-by bay C is stopped temporarily by means of the relative descent control device 22, all the items on tube 4 are released, which, as they arrive at junction 5, are loaded back onto the storing ring 1 or, if necessary, sent to the exit; tube 4 having been partly emptied the loading procedure can be continued from the first stretch of descending tube 13. The procedure thus described makes better use of the available space, that is of the length of the storing ring 1, despite an inconstant load arriving from the corresponding loading-unloading line 12: the effect is one of continuously re-compacting the items of clothing on the said storing ring.

The distribution of the items, in the boxes 35 in destination area 34 is carried after they leave the exit line 33, which has a number of bar code readers 20 at the beginning of each stretch of descending tube 36 controlling the corresponding slip points 17: an item destined for a particular box is diverted from line 33 and comes to a halt; the box can consist directly of the packaging used for shipment. The items that are not directed to one of the boxes 35 continues until it reaches the final return box from where, after its bar code has again been checked is re-introduced into the plant by operator O in the loading area 25.

For each slip point 17 there are a pair of detectors 21 one upstream and one downstream on the diverted branch, as wall as the bar code reader 20, so as to activate the bar reading of the bar code before the slip point comes into use and then to check that the diversion has taken place. The descent control devices 22 on the stretches 13 and 4 upstream of the junction 5 are equipped with relative detectors 21 to operate the controllers on the other stretch of tube so as to prevent congestion at the said junction, as described previously for the passage from the phase of loading-unloading of the ring 1 to the unloading-recompaction phase.

The rocker slip point 51 is operated by activating the solenoid 54 which positions the rocker in the contact position 52 so as to remove the hook 10 from the helical gear and to carry out the diversion onto the descending tube: the hook, once it has passed the position of the hinge 55, pushes on the tail 57 of the rocker helping the opening action of the spring 56 bringing it back to the resting position 53. The slip points with the oscillating cone 58 or the retractable needle 62 operate in similar manners: all the slip points have the diverted branch which separates sideways and downwards with respect to the axis of the helical gear with angles usually of between 10° and 50°.

The operation of the rolling supports for the helical gear, both rigid and flexible, is very clear from the figures; the dismantling of the supports, shown in Figure 29 and 30 after having removed the U bolts 73 is made easier by the chamfer 92 on the internal teeth in the ends 80 of the helical gear: the seal 87 is removed during dismantling or replaced during assembly in the position shown in Figure 30; finally, in the case of the end support joint of the flexible helical gear, Figure 32, the core 99 is snap inserted, by means of the spring washer 100, in groove 101 of the elongated rotating pin 98: this positioning serves to prevent the flexible helical gear 97 from pulling out of its support, though the forces are not very high as most of the load is absorbed by the cradle supports 38, 105 of the said flexible helical gear.

In practice the materials, dimensions and details of execution may be different from but technically equivalent to those described without departing from the scope of the claims.

The arrangement of the store, for example, if the structure of the building will allow it, the rings 1 can branch off on both sides of the loading-unloading lines 12 and return line 15 at the same time; the arrangement of the loading area 25 and/or the distribution area 34, can be at different levels with respect to that of the storage area 32, even being located beneath it; finally, the arrangement of the storage rings 1 can not be at the same height even if connected to the same level of loading-unloading and return lines 12, 15: the store can therefore have lines that are not horizontal, even only in part, to compensate for differences in level between rings 1 suitable for products of different typology and which have, therefore, differences in height.

Although less advantageous, the rolling bearing 72, 75 of the support, motorised or not, can be replaced with two bearings, each coupled to the external ring of the end of the helical gear 80 and on the internal ring of a fixed hollow pin, supported by the structure 24, inside which rotate a small splined shaft, with radial joint, at each end of the helical gear 80.

## Claims

1. Continuous helical gear plant for conveying and storing suspended items, including stretches of coaxial and synchronously rotating helical gears constituting conveyor lines and parking and storing rings connected to them by means of slip points (17) and joints (18,19), comprising at least one scanner (20) upstream of each slip point for controlling the same, characterised in that each parking and storing ring (1) is connected, by means of one descending spiral node (11) and two conveyor lines (12) at least, of which one at the top of the other, for loading and unloading the ring; the descending spiral node includes a first descending tube (13), reaching from the upper conveyor line to the parking ring, and a second descending tube (14), reaching from the parking ring to the lower conveyor line; said slip points (17) switching the hangers from the upper conveyor line (12) to the first descending tube and from the parking ring to the second descending tube; said joints (18,19) switching the hangers from the first descending tube to the parking ring and from the second descending tube to the lower conveyor line (12).

2. Continuous helical gear plant, as claimed in the preceding claim, characterised in that it presents more than one conveyor lines (12) following in rise having loading-unloading function, each of them being connected with a parking and storing ring (1) at least.

3. Continuous helical gear plant, as claimed in the preceding claim, characterised in said loading and unloading lines (12) being combined with back conveyor lines (15) at different levels.

4. Continuous helical gear plant, as claimed in one of the preceding claims 2, 3, characterised in that in combination with or as an alternative to the succession of loading-unloading lines mentioned previously: stretches of helical gear conveyor ascending from the entry line to the loading line higher up (12); the succession of loading-unloading lines (12) descending to lower levels: the said lines being connected by means of spiral nodes (11) with the parking and storing rings (1).

5. Continuous helical gear plant, as claimed in one of the preceding claims, characterised in that the junction (5) between one said spiral node (11) and the storing ring (1) positioned at a lower level than that of the ring and between the starting and ending levels of the node itself.

6. Continuous helical gear plant, as claimed in one of the preceding claims, characterised in that the spiral node (11) is consisting of stretches of smooth tube (13,14) descending from the upper loading line, or even the unloading line of higher level rings, to the junction (13) and from the junction to the lower unloading line (14), or even the loading line of lower level rings; a stretch of smooth tubing descending (4) from the level of the storing ring (1) to the level of the junction (5) and a stretch of rotating helical gear ascending (3) to the level of the said junction of the said ring; descent control devices (22) on the descending tubes for the hangers (9) with the suspended items (8) of clothing.

7. Continuous helical gear plant, as claimed in the preceding claim, characterised in that it presents detector of presence (21) of the hangers both before and after the slip points (17), at the junctions (5), in the vicinity of the descent control devices (22) and also at the beginning of the stretch of descending tube (4) of the ring (1).

8. Continuous helical gear plant, as claimed in one of the preceding claims, characterised in comprising scanners (20) consisting of bar code readers connected with a processor that controls the slip points (17) so as to manage the stock and to deliver the items (8) to their designated boxes (35).

9. Continuous helical gear plant, as claimed in the preceding claim, characterised in that it presents the bar code, applied to each hanger (9), with horizontal lines and the scanner (20) reading the code vertically so as to identify the item in question.

10. Continuous helical gear plant, as claimed in one of the preceding claims, 8, 9, characterised in that it presents a bar code reader (20) positioned at each slip point (17) for the systematic monitoring of the passing items and controlling the switching.

11. Continuous helical gear plant, as claimed in the preceding claim 6, characterised in that it presents in combination with a descent control device (23) a scanner detector of presence (23) for a stretch of helical gear (12,31) preceding the joint (19) between the descending tube (14,28) and the said helical gear.

12. Continuous helical gear plant, as claimed in one of the preceding claims, characterised in that it presents a series spiral rings (U) connecting loading-unloading lines (12) at different levels, for the rapid exit of the hangers without interfering with the parking and storing rings (1).

13. Continuous helical gear plant, as claimed in one of the preceding claims, characterised in that it presents slip points (17) provided with: a rocker (51) rocking from a position (52) up against the helical gear and a position (53) adequately distanced from the said helical gear to allow the hook (10) to pass without being diverted; a solenoid (54) controlling the rocking on hinge (55) and against the action of spring (56); the tail (57) of the rocker (51) which with the weight of the hanger (9) facilitates the opening of the slip point.

14. Continuous helical gear plant, as claimed in one of the preceding claims from 1 to 12, characterised in that it presents slip points (17) provided with: a oscillating cone (58) on hinge (59) activated by a pneumatic actuator cylinder (60) for the open position (61).

15. Continuous helical gear plant, as claimed in one of the preceding claims from 1 to 12, characterised in that it presents slip points (17) provided with: a needle (62), activated by a pneumatic actuator cylinder (63) to reach the diversion position (64): the hook (10) of the hanger (9) does not stop at the start of the descending tube because of the guiding tapered end (65).

16. Continuous helical gear plant, as claimed in one of the preceding claims from 13 to 15, characterised in that the slip points (17) present the diverted branch which separates sideways and downwards with respect to the axis of the helical gear with angles usually of between 10° and 50°.

17. Continuous helical gear plant, as claimed in one of the preceding claims from 6 to 15, characterised in that it presents said descent contol devices (22) appointed by a stretch (66) of helical gear positioned against the top of the descending tube to stop and release the hangers (9) on command: the helical gear is made to rotate by a stepper motor reducer (67).

18. Continuous helical gear plant, as claimed in one of the preceding claims from 6 to 15, characterised in that it presents said descent control devices (22) appointed by a cam (68) positioned against the top of the descending tube to stop and release the hangers (9) on command; the cam is made to rotate by a stepper motor reducer (69): it has just a single cavity (70) for the passage of the hook (10), one for each complete revolution of the shaft.

19. Continuous helical gear plant, as claimed in the preceding claims, 1 to 18, including supports, characterised in that it presents: rolling friction supports, motorized or not, in which the end of the helical gear (80,97), rigid or flexible, is splined to a rotating pin (76,91,98) equipped with a driving element (77) coupled to the race (75) of a rolling bearing; the opposite race (76) being coupled rigidly to the structure by means of a support (71,89) having a thickness not greater than the base of the thread of the helical gear.

20. Continuous helical gear plant, as claimed in the preceding claim, characterised in that the end of the helical gear is keyed to the internal race (75) of the said rolling bearing (72,75), advantageously a needle bearing, by means of the said rotating pin (76,91,98); the external race (72) being rigidly fixed to the support structure (24,71,89) by means of a U bolt (73).

21. Continuous helical gear plant, as claimed in one of the preceding claims 19, 20, characterised in that it presents the said spline between the pin (76,91,98) and the end of the helical gear (80,97) consisting of a radial tooth joint (81) made oscillating due to the curvature of at least one of the sets (82,83) of teeth.

22. Continuous helical gear plant, as claimed in one of the preceding claims from 19 to 21, characterised in that it presents at least a motorised support equipped with a stretch of continuous helical gear with teeth (78) set into the thread, coupled to a support cylinder (86) at whose ends there are two rotating pins (76) to drive the ends of the helical gears (80,97) coupled to it; the stretch of helical gear being driven by a toothed cylinder (79) placed underneath it in a sub-vertical position, supported on bearings (88) at the sides (71) of the said motorised supports.

23. Continuous helical gear plant, as claimed in one of the preceding claims from 19 to 22, characterised in that it presents seals (87) placed in its relative seat (93) at the ends of the helical gear (80,97) or the stretch of toothed helical gear (78); a chamfer (92) on the internal teeth (82) of the said splined joint (81), to facilitate the dismantling and assembly of the support, be it motorised or not.

24. Continuous helical gear plant, as claimed in one of the preceding claims from 19 to 23, characterised in that it presents in the support, motorized or not, at the joint between the rigid helical gear (80), or the stretch of toothed helical gear (78), and the flexible helical gear (97) there being a rotating pin elongated (98) on the side of the flexible helical gear with a groove (101) into which is snap-inserted an elastic element (100) held (102) in the end of the tubular core (99) of the said flexible helical gear.

25. Continuous helical gear plant, as claimed in one of the preceding claims from 19 to 24, characterised in that it presents a pin fixed (95) to the support structure to hold the end of the helical gear (80) in the vicinity of a stretch of descending tube (94) which supports a wheel (96) made of low friction material, or a rolling bearing, inside the end of the said helical gear.

26. Continuous helical gear plant, as claimed in one of the preceding claims, characterised in that it presents the support for the flexible helical gear (104) consisting of a cradle (105) with rollers (106) in its bottom portion.

## Patentansprüche

1. Anlage mit kontinuierlich arbeitendem Schneckengetriebe zum Befördern und Lagern hängender Gegenstände, umfassend Abschnitte aus koaxial und synchron drehenden Schneckengetrieben, die Förderstrecken und Park- und Lagerungsringe bilden, die mit Hilfe von Kreuzungsweichen (17) und Verbindungsstellen (18, 19) an diese angeschlossen sind, umfassend mindestens einen stromaufwärts jeder Kreuzungsweiche angeordneten Scanner (20) zum Steuern derselben, gekennzeichnet dadurch, daß jeder Park- und Lagerungsring (1) zum Be- und Entladen des Ringes mit mindestens einem abfallenden Spiralknotenpunkt (11) und zwei Förderstrecken (12) verbunden ist, von denen eine oberhalb der anderen liegt; wobei der abfallende Spiralknotenpunkt ein erstes abfallendes Rohr (13), das von der oberen Förderstrecke zum Parkring reicht, und ein zweites abfallendes Rohr (14) umfaßt, das vom Parkring zur unteren Förderstrecke reicht; wobei die Kreuzungsweichen (17) die Aufhänger von der oberen Förderstrecke (12) zum ersten abfallenden Rohr und vom Parkring zum zweiten abfallenden Rohr verschieben; die Verbindungsstellen (18, 19) die Aufhänger von dem ersten abfallenden Rohr zum Parkring und vom zweiten abfallenden Rohr zur unteren Förderstrecke (12) verschieben.

2. Anlage mit kontinuierlich arbeitendem Schneckengetriebe gemäß dem vorhergehenden Anspruch, gekennzeichnet dadurch, daß sie mehr als eine Förderstrecke (12) vorsieht, die aufsteigend aufeinander folgen, und eine Belade- und Entladefunktion haben, wobei jede von Ihnen mit mindestens einem Park- und Lagerungsring (1) verbunden ist.

3. Anlage mit kontinuierlich arbeitendem Schneckengetriebe gemäß dem vorhergehenden Anspruch, gekennzeichnet dadurch, daß die Belade- und Entladestrecken (12) mit Rückbeförderungsstrecken (15) auf unterschiedlichen Ebenen verbunden sind.

4. Anlage mit kontinuierlich arbeitendem Schneckengetriebe gemäß einem der vorhergehenden Ansprüche 2, 3, gekennzeichnet dadurch, daß in Kombination mit oder als eine Alternative zu der Aufeinanderfolge der zuvor erwähnten Belade- und Entladestrecken vorgesehen sind: Schneckengetriebeförderabschnitte, die von der Eintrittsstrecke zur Beladestrecke höher hinauf (12) ansteigen; die Aufeinanderfolge von Belade-Entladestrecken (12), die auf untere Ebenen abfallen; wobei die Strecken mit Hilfe von Spiralknotenpunkten (11) mit den Park- und Lagerungsringen (1) verbunden sind.

5. Anlage mit kontinuierlich arbeitendem Schneckengetriebe gemäß einem der vorhergehenden Ansprüche, gekennzeichnet dadurch, daß die Verbindungsstelle (5) zwischen einem Spiralknotenpunkt (11) und dem Lagerungsring (1) auf einer niedrigeren Ebene als jene des Ringes und zwischen dem Beginn und dem Ende der Ebenen des Knotens selbst angeordnet ist.

6. Anlage mit kontinuierlich arbeitendem Schneckengetriebe gemäß einem der vorhergehenden Ansprüche, gekennzeichnet dadurch, daß der Spiralknotenpunkt (11) aus glatten Rohrabschnitten (13, 14) besteht, die von der oberen Beladungsstrecke oder auch der Entladungsstrecke der höherliegenden Ringe zur Verbindungsstelle (13) und von der Verbindungsstelle zur unteren Endladungsstrecke (14) oder auch zur Beladungsstrecke unterer Ringe abfallen; einen glatten Rohrabschnitt (4), der von der Ebene des Lagerungsringes (1) auf die Ebene der Verbindungsstelle (5) abfällt, und einen rotierenden Schneckengetriebeabschnitt (13), der auf die Ebene der Verbindungsstelle des Ringes ansteigt; Abwärtsbewegungssteuereinrichtungen (22) an den abfallenden Rohren für die Aufhänger (9) mit den hängenden Bekleidungsstükken (8).

7. Anlage mit kontinuierlich arbeitendem Schneckengetriebe gemäß dem vorhergehenden Anspruch, gekennzeichnet dadurch, daß sie sowohl vor als auch nach den Kreuzungsweichen (17) an den Verbindungsstellen (5) in der Nähe der Abwärtsbewegungssteuereinrichtungen (22) und auch am Beginn des Abschnittes des abfallenden Rohres (4) des Ringes (1) eine Anzeigeeinrichtung für die Anwesenheit (21) der Aufhänger vorsieht.

8. Anlage mit kontinuierlich arbeitendem Schneckengetriebe gemäß einem der vorhergehenden Ansprüche, gekennzeichnet durch Umfassen von Scannern (20), die aus mit einem Prozesser verbundenen Barcodelesern besteht, der die Kreuzungsweichen (17) steuert, um den Bestand zu verwalten und die Gegenstände (8) an ihre bestimmten Behälter (35) zu liefern.

9. Anlage mit kontinuierlich arbeitendem Schneckengetriebe gemäß dem vorhergehenden Anspruch, gekennzeichnet dadurch, daß der Barcode an jedem Aufhänger (9) mit horizontalen Linien angebracht ist und der Scanner (20) den Code vertikal liest, um den fraglichen Gegenstand zu identifizieren.

10. Anlage mit kontinuierlich arbeitendem Schneckengetriebe gemäß einem der vorhergehenden Ansprüche 8, 9, gekennzeichnet dadurch, daß ein Barcodeleser (20) vorgesehen ist, der an jeder Kreuzungsweiche (17) zum systematischen Überwachen der passierenden Gegenstände und Steuern des Verschiebens angeordnet ist.

11. Anlage mit kontinuierlich arbeitendem Schneckengetriebe gemäß dem vorhergehenden Anspruch 6, gekennzeichnet dadurch, daß sie in Kombination mit einer Abwärtsbewegungssteuereinrichtung (23) eine Scanner-Anwesenheitsanzeige- Einrichtung (23) für einen Schneckengetriebeabschnitt (12, 31) vorsieht, die der Verbindungsstelle (19) zwischen dem abfallenden Rohr (14, 28) und dem Schneckengetriebe vorangeht.

12. Anlage mit kontinuierlich arbeitendem Schneckengetriebe gemäß einem der vorhergehenden Ansprüche, gekennzeichnet dadurch, daß sie eine Reihe Spiralringe (U) vorsieht, die die Belade- und Entladestrecken (12) auf unterschiedlichen Ebenen für den schnellen Austritt der Aufhänger ohne Behindern der Park- und Lagerungsringe (1) verbindet.

13. Anlage mit kontinuierlich arbeitendem Schneckengetriebe gemäß einem der vorhergehenden Ansprüche, gekennzeichnet dadurch, daß sie Kreuzungsweichen (17) vorsieht, die versehen sind mit: einem Schwinghebel (51), der aus einer Position (52) nach oben an das Schneckengetriebe und in eine Position (53) schwingt, die von dem Schneckengetriebe ausreichend beabstandet ist, so daß der Haken (10), ohne abgelenkt zu werden, hindurchlaufen kann; einem Magnetventil (54), das das Schwingen an der Drehachse (55) und entgegen der Wirkung der Feder (56) steuert; dem Ausläufer (57) des Schwinghebels (51), der mit dem Gewicht des Aufhängers (9) das Öffnen der Kreuzungsweiche erleichtert.

14. Anlage mit kontinuierlich arbeitendem Schneckengetriebe gemäß einem der vorhergehenden Ansprüche 1 bis 12, gekennzeichnet dadurch, daß sie Kreuzungsweichen (17) vorsieht, die versehen sind mit: einem oszillierenden Kegel (58) an der Drehachse (59), die durch einen Druckluftstellzylinder (60) für die offene Position (61) aktiviert wird.

15. Anlage mit kontinuierlich arbeitendem Schneckengetriebe gemäß einem der vorhergehenden Ansprüche 1 bis 12, gekennzeichnet dadurch, daß sie Kreuzungsweichen (17) vorsieht, die versehen sind mit: einer durch einen Druckluftstellzylinder (63) aktivierten Nadel (62) zum Erreichen der Ablenkungsposition (64); wobei der Haken (10) des Aufhängers (9) wegen des verjüngten Führungsendes (65) zu Beginn des abfallenden Rohres nicht anhält.

16. Anlage mit kontinuierlich arbeitendem Schneckengetriebe gemäß einem der vorhergehenden Ansprüche 13 bis 15, gekennzeichnet dadurch, daß die Kreuzungsweichen (17) die Umlenkabzweigung vorsehen, die sich seitlich und nach unten in bezug auf die Achse des Schneckengetriebes in Winkeln von normalerweise zwischen 10° und 50° teilt.

17. Anlage mit kontinuierlich arbeitendem Schneckengetriebe gemäß einem der vorhergehenden Ansprüche 6 bis 15, gekennzeichnet dadurch, daß sie Abwärtsbewegungssteuereinrichtungen (22) vorsieht, die durch einen Schneckengetriebeabschnitt (66) bestimmt werden, der an der Oberseite des abfallenden Rohres angeordnet ist, um die Aufhänger (9) auf Befehl anzuhalten und freizugeben, wobei das Schneckengetriebe so ausgebildet ist, daß es durch eine Schrittmotoruntersetzung (67) rotiert.

18. Anlage mit kontinuierlich arbeitendem Schneckengetriebe gemäß einem der vorhergehenden Ansprüche 6 bis 15, gekennzeichnet dadurch, daß sie Abwärtsbewegungssteuereinrichtungen (22) vorsieht, die durch einen an der Oberseite des abfallenden Rohres angeordneten Nocken (68) bestimmt werden, um die Aufhänger (9) auf Befehl anzuhalten und freizugeben; wobei der Nocken so ausgebildet ist, daß er durch eine Schrittmotoruntersetzung (69) rotiert; wobei er nur eine einzelne Nut (70) für den Durchgang des Hakens (10) einmal pro vollständiger Umdrehung der Welle besitzt.

19. Anlage mit kontinuierlich arbeitendem Schneckengetriebe gemäß den vorhergehenden Ansprüchen 1 bis 18, umfassend Träger, gekennzeichnet dadurch, daß sie vorsieht: motorisierte oder nichtmotorisierte Rollreibungsträger, in denen das Ende des Schneckengetriebes (80, 97), starr oder flexibel, an einem drehbaren Stift (76, 91, 98) durch Keilnut verbunden ist, das mit einem mit dem Laufring (75) eines Wälzlagers verbundenen Antriebselement (77) ausgerüstet ist; wobei der gegenüberliegende Laufring (76) mittels einer Halterung (71, 89) mit einer Dicke, die nicht größer als der Boden des Gewindes des Schneckengetriebes ist, starr an der Struktur befestigt ist.

20. Anlage mit kontinuierlich arbeitendem Schneckengetriebe gemäß dem vorhergehenden Anspruch, gekennzeichnet dadurch, daß das Ende des Schneckengetriebes mit dem Innenlaufring (75) des Wälzlagers (72, 75), vorzugsweise eines Nadellagers, mittels des rotierenden Stiftes (76, 91, 98) verkeilt ist; wobei der Außenlaufring (72) mit Hilfe einer Bügelschraube (73) fest an der Trägerstruktur (24, 71, 89) befestigt ist.

21. Anlage mit kontinuierlich arbeitendem Schneckengetriebe gemäß einem der vorhergehenden Ansprüche 19, 20, gekennzeichnet dadurch, daß sie die Keilnut zwischen dem Stift (76, 91, 98) und dem Ende des Schneckengetriebes (80, 97) vorsieht, die aus einer radialen Zahnverbindung (81) besteht, die in Folge der Wölbung von mindestens einem der Zahnsätze (82, 83) oszillierend ausgebildet ist.

22. Anlage mit kontinuierlich arbeitendem Schneckengetriebe gemäß einem der vorhergehenden Ansprüche 19 bis 21 , gekennzeichnet dadurch, daß sie mindestens einen motorisierten Träger vorsieht, der mit einem Abschnitt mit einem kontinuierlichen Schneckengetriebe mit in das Gewinde eingesetzten Zähnen (78) ausgerüstet ist, die mit einem Trägerzylinder (86) verbunden sind, an dessen Enden zwei rotierende Stifte (76) angeordnet sind, um die Enden der mit ihnen verbundenen Schneckengetriebe (80, 97) anzutreiben; wobei der Schneckengetriebeabschnitt durch einen unterhalb von diesem in einer unteren vertikalen Position angeordneten, auf Lagern (88) an den Seiten (71) der motorisierten Träger angeordneten, verzahnten Zylinder (79) angetrieben wird.

23. Anlage mit kontinuierlich arbeitendem Schneckengetriebe gemäß einem der vorhergehenden Ansprüche 19 bis 22, gekennzeichnet dadurch, daß sie Dichtungen (87), die in ihrem jeweiligen Sitz (93) an den Enden des Schneckengetriebes (80,97) oder des verzahnten Schneckengetriebeabschnittes (78) angeordnet sind; sowie eine Phase (92) an den inneren Zähnen (82) der Keilnutverbindung (81) zum Erleichtern des Demontierens und Zusammenbaus des motorisierten oder nicht motorisierten Trägers vorsieht.

24. Anlage mit kontinuierlich arbeitendem Schneckengetriebe gemäß einem der vorhergehenden Ansprüche 19 bis 23, gekennzeichnet dadurch, daß sich an dem motorisierten oder nichtmotorisierten Träger an der Verbindungsstelle zwischen dem starren Schneckengetriebe (80) oder dem verzahnten Schneckengetriebeabschnitt (78) und dem flexiblen Schneckengetriebe (97) ein rotierender, verlängerter Stift (98) befindet, der auf der Seite des flexiblen Schneckengetriebes mit einer Nut (101) versehen ist, in die ein elastisches Element (100) durch Einschnappen eingesetzt ist, das in dem Ende (102) des rohrförmigen Kernes (99) des flexiblen Schneckengetriebes gehalten wird.

25. Anlage mit kontinuierlich arbeitendem Schneckengetriebe gemäß einem der vorhergehenden Ansprüche 19 bis 24, gekennzeichnet dadurch, daß sie einen an der Trägerstruktur befestigten Stift (95) vorsieht, um das Ende des Schneckengetriebes (80) in der Nähe eines Abschnittes des abfallenden Rohres (94) zu halten, das ein aus einem reibungsarmen Material hergestelltes Rad (96) oder ein Rollager innerhalb des Endes des Schneckengetriebes trägt.

26. Anlage mit kontinuierlich arbeitendem Schneckengetriebe gemäß einem der vorhergehenden Ansprüche, gekennzeichnet dadurch, daß es den Träger für das flexible Schneckengetriebe (104) vorsieht, der aus einem Geste (105) mit Rollen (106) an seinem unteren Teil besteht.

## Revendications

1. Installation à vis continue pour le transport et le stockage de confection suspendue, qui comprend des tronçons de vis coaxiaux et tournants en synchronisme qui constituent les lignes de transport (12, 15) et des bagues de stationnement et de stockage accouplées aux lignes par des aiguillages (17) et par des joints (18, 19), qui comprend au moins un lecteur automatique (20) en amont de chaque aiguillage pour le contrôle du même, caractérisée en ce que, chaque bague de stationnement et de stockage (1) est accouplée par un noeud spiroïdal descendant (11) à deux lignes de transport (12), dont l'une est supérieure et l'autre est inférieure, pour le chargement et le dechargement de la bague; le noeud spiroïdal descendant comprend un premier tronçon de tube descendant (13), qui assemble la ligne de transport supérieure à la bague de stationnement, et un deuxième tronçon de tube descendant (14), qui accouple la bague de stockage à la ligne de transport inférieure; lesdits aiguillages (17) détournent les cintres de la ligne de transport supérieure (12) au premier tube descendant et de la bague de stationnement au dexième tube descendant; lesdits accouplements (18, 19) détournent les cintres du premier tube descendant à la bague de stationnement et du dexième tube descendant à la ligne de transport inférieure (12).

2. Installation à vis continue, suivant le résumé précédent, caractérisée en ce que, elle présente plusieurs lignes de transport (12) avec fonction de chargement-dechargement qui se succèdent en montée, chacune assemblée à une bague de stationnement et de stockage (1).

3. Installation à vis continue, suivant le résumé précedant, caractérisée en ce que, elle présente les dites lignes de chargement-dechargement (12) unies à des lignes de transport qui reviennent (15) à un différent niveau.

4. Installation à vis continue, suivant l'un des résumés précédents 2, 3, caractérisée en ce que, en coïncidence ou en alternative à la succession des lignes de chargement-dechargement sous mentionnées, elle présente : des tronçons de vis de transport ascendants de la ligne d'entrée à la ligne de chargement la plus haute (12); la succession de lignes de chargement-dechargement (12) descendante vers le bas: lesdites lignes sont unies par des noeuds spiroïdaux (11) à des bagues de stationnement et de stockage (1).

5. Installation à vis continue, suivant l'un des résumés précedents, caractérisée en ce que, elle présente la liaison à croisement (5) entre ledit noeud spiroïdal (11) et la bague de stockage (1) placée à un niveau inférieur à celui de la bague et intermédiaire entre celui de début et de fin dudit noeud.

6. Installation à vis continue, suivant l'un des résumés précédents, caractérisée en ce que, elle présente le noeud spiroïdal (11) constitué par des tronçons de tube descendants lisses (13, 14), de la ligne de chargement supérieure, ou bien de la ligne de déchargement par des bagues à un niveau plus haut, au croisement (13) et du croisement à la ligne de déchargement inférieure (14), ou bien de chargement par des bagues à un niveau inférieur; un troncon de tube descendant lisse (4) entre le niveau de la bague de stockage (1) et le niveau du croisement (5) et un troncon de vis tournant ascendant (3) dudit croisement au niveau de ladite bague; sur les tubes descendants des dispositifs de contrôle de la descente (22) des cintres (9) avec les pièces (8).

7. Installation à vis continue, suivant le résumé précédent, caractérisée en ce que, elle présente des détecteurs de présence (21) des cintres avec les pièces soit avant soit après les aiguillages (17), aux croisements (5), près des dispositifs de contrôle de la descente (22) et, enfin, au début du tronçon de tube descendant (4) de la bague (1).

8. Installation à vis continue, suivant l'un des résumés précédents, caractérisée en ce que, elle présente des lecteurs (20) constitués par des lecteurs de code à barre assemblés à un ordinateur du procédé qui entraîne les aiguillages (17) pour la gestion contrôlée du stockage et de la remise aux respectifs box (35) réservés aux pièces (8).

9. Installation à vis continue, suivant le résumé précédent, caractérisée en ce que, elle présente le code à barre, appliqué à chaque cintre (9), aux raies horizontales et le lecteur (20) à exploration verticale du code, pour l'identification de la pièce transportée.

10. Installation à vis continue, suivant l'un des résumés précédents 8, 9, caractérisée en ce que, elle présente un lecteur de code à barre (20) rangé en correspondance de chaque aiguillage (17), pour le contrôle systématique des pièces transportées et la commande de dévoiment.

11. Installation à vis continue, suivant le résumé précédent 6, caractérisée en ce que, elle présente à côté d'un dispositif de contrôle de la descente (23) un détecteur de présence (23) pour l'exploration d'un tronçon de la vis de transport (12, 31) antérieur à l'accouplement (19) entre le tube descendant (14, 28) et ladite vis.

12. Installation à vis continue, suivant l'un des résumés précédents, caractérisée en ce que, elle présente une série de bagues spiroïdales (U) qui relient les lignes de chargement-déchargement (12) à un différent niveau, pour la sortie rapide des cintres avec les pièces sans intérferer avec les bagues de stationnement et de stockage (1).

13. Installation à vis continue, suivant l'un des résumés précédents, caractérisée en ce que, elle présente les aiguillages (17) équipés de: balancelle (51) flottante entre une position (52) à côté de la vis de transport et une position (53) suffisamment éloignée de ladite vis, pour le passage du crochet (10) sans dévoiment; aimant (54) de commande du flottement sur la cheville (55) contre l'action d'un ressort (56); balancelle (51) équipée d'une queue (57) qui, par le poid du cintre (9) aide l'ouverture de l'aiguillage.

14. Installation à vis continue, suivant l'un des résumés précédents de 1 à 12, caractérisée en ce que, elle présente les aiguillages (17) équipés de cône flottant (58) sur la cheville (59) entraînée par un cylindre réalisateur pneumatique (60) pour la position d'ouverture (61).

15. Installation à vis continue, suivant l'un des résumés précédents de 1 à 12, caractérisée en ce que, elle présente les aiguillages (17) équipés de pointeau (62) entraîné par le cylindre réalisateur pneumatique (63) pour atteindre la position de dévoiment (64) : le crochet (10) du cintre (9) ne s'arrête pas au début du tube descendant pour la présence de l'extremité fuselée (65).

16. Installation à vis continue, suivant l'un des résumés précédents de 13 à 15, caractérisée en ce que, les aiguillages présentent la branche déviée qui se détache latéralement et vers le bas par rapport à l'axe de la vis de transport par des angles entre 10 et 50 .

17. Installation à vis continue, suivant l'un des résumés précédents de 6 à 15, caractérisée en ce que, elle présente lesdits contrôleurs de descente (22) constitués par un tronçon de vis (66) rangé au-dessus du tube descendant, pour l'arrêt et la délivrance sous commande des cintres (9) : la vis est entrainée en rotation par un moteur réducteur (67) pas à pas.

18. Installation à vis continue, suivant l'un des résumés précédents de 6 à 15, caractérisée en ce que, elle présente lesdits contrôleurs de descente (22) constitués par une came (68) rangée au-dessus du tube descendant, pour l'arrêt et la délivrance sous commande du cintre (9):la came est entraînée en rotation par un moteur réducteur (69) pas à pas: elle présente une seule cavité (70) pour le passage d'un crochet (10) à chaque tour complet de l'arbre.

19. Installation à vis continue, suivant l'un des résumés précédents de 1 à 18, qui comprend des paliers, caractérisée en ce que, elle présente des paliers à frottement de roulement, motorisés ou non, où l'extremité de la vis (80, 97), rigide ou flexible, est calée sur une cheville pivotante (76, 91, 98), pourvue d'un organe de traînement (77) et accouplée à la bague (75) d'un palier à roulement; la bague opposée (76) accouplée d'une façon rigide à la structure par un support (71, 89) d'épaisseur plus mince que l'extremité du filet de la vis.

20. Installation à vis continue, suivant le résumé précédent, caractérisée en ce que, elle présente ledit palier à roulement (72, 75), avantageusement à molettes, avec l'extremité de la vis calée sur la bague intérieure (75), par ladite cheville pivotante (76, 91, 98); la bague extérieure (72) devient solidaire avec la structure de support (24, 71, 89) par un crampillon (73).

21. Installation à vis continue, suivant l'un des résumés précédents 19 ou 20, caractérisée en ce que, elle présente ledit assemblage entre la cheville (76, 91, 98) et l'extremité de la vis (80, 97) créé par un joint radial denté flottant (81), dû au bombage donné à l'une des dentures (82, 83).

22. Installation à vis continue, suivant l'un des résumés précédents de 19 à 21, caractérisé en ce que, elle présente le palier à moteur qui a un tronçon de vis continue avec denture (78) tiré du filet, accouplé à un cylindre (86) de support aux extremités duquel il y a deux chevilles flottantes (76) pour le traînement des extremités (80, 97) des vis accouplées à elles; le mouvement transmis à un tronçon de la vis par un cylindre denté (79) placé dans la partie inférieure et en position sub-verticale, soutenu par des paliers (88) à chaque côté (71) dudit palier à moteur.

23. Installation à vis continue, suivant l'un des résumés précédents de 19 à 22, caractérisé en ce que, elle présente à l'extremité (80, 97) de la vis ou du tronçon de vis dentée (78) une bague de joint (87), placée dans son propre logement (93); un chanfrein (92) sur la denture intérieure (82) dudit jouin denté (81), pour aider le demontage du palier à moteur ou non.

24. Installation à vis continue, suivant l'un des résumés précédents de 19 à 23, caractérisée en ce que, elle présente dans le palier d'assemblage, à moteur ou non, entre la vis rigide (80), ou le tronçon de vis dentée (78), et la vis flexible (97) une cheville pivotante prolongée (98) du côté de l'extremité de la vis flexible, pourvue d'une rainure (101) pour le branchement à détente d'un engin flottant (100) retenu (102) dans l'extremité de l'âme tubolaire (99) de la vis flexible.

25. Installation à vis continue, suivant l'un des résumés précédents de 19 à 24, caractérisée en ce que, elle présente pour le palier de l'extremité de la vis (80) à proximité d'un tronçon du tube descendant (94), une cheville fixée (95) à la structure de support qui soutient une roue (96) en matériel anti-frottement ou un palier à roulement, dans ladite extremité de la vis.

26. Installation à vis continue pour le transport et le stockage des pièce suspendues, à coïncidence avec un ou plusieurs résumés précédents, caractérisée en ce que, elle présente le palier pour la vis flexible (104) constitué d'un berceau (105) avec des galets (106) dans sa partie inférieure.
